(19) **Europäisches Patentamt European Patent Office Office européen des brevets**

(11) **EP 4 248 064 B1**

(12) **EUROPEAN PATENT SPECIFICATION**

(45) Date of publication and mention
of the grant of the patent:
**22.04.2026 Bulletin 2026/17**

(21) Application number: **21895508.6**

(22) Date of filing: **17.11.2021**

(51) International Patent Classification (IPC):
*E21B 47/06* (2012.01)    *E21B 49/00* (2006.01)
*G06N 20/20* (2019.01)    *G06N 3/044* (2023.01)
*G06N 3/045* (2023.01)    *G06N 3/08* (2023.01)
*G06N 3/0464* (2023.01)    *G06N 3/09* (2023.01)
*G06N 3/0442* (2023.01)    *G06N 3/0895* (2023.01)

(52) Cooperative Patent Classification (CPC):
**E21B 49/008; G06N 3/0442; G06N 3/0464;
G06N 3/0895; G06N 3/09;** E21B 2200/22;
G06N 3/044; G06N 3/045; G06N 3/08

(86) International application number:
**PCT/US2021/059724**

(87) International publication number:
**WO 2022/109026 (27.05.2022 Gazette 2022/21)**

(54) **A MACHINE LEARNING BASED APPROACH TO WELL TEST ANALYSIS**

AUF MASCHINENLERNEN BASIERENDER ANSATZ ZUR BOHRLOCHTESTANALYSE

APPROCHE BASÉE SUR L'APPRENTISSAGE MACHINE POUR L'ANALYSE DE TESTS DE PUITS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **17.11.2020 IN 202021050002**

(43) Date of publication of application:
**27.09.2023 Bulletin 2023/39**

(73) Proprietors:
• **Services Pétroliers Schlumberger
75007 Paris (FR)**
Designated Contracting States:
**FR**
• **GeoQuest Systems B.V.
2586 BJ The Hague (NL)**
Designated Contracting States:
**AL AT BE BG CH CY CZ DE DK EE ES FI GB GR
HR HU IE IS IT LI LT LU LV MC MK MT NL NO PL
PT RO RS SE SI SK SM TR**

(72) Inventors:
• **KULKARNI, Mandar Shrikant
Pune, 411006 (IN)**
• **NAGARAJ, Guru Prasad
Pune, 411006 (IN)**
• **PILLAI, Prashanth
Pune, 411006 (IN)**

(74) Representative: **Schlumberger Intellectual
Property Department
Parkstraat 83
2514 JG Den Haag (NL)**

(56) References cited:
**US-A1- 2018 100 948    US-A1- 2019 017 352
US-B2- 8 498 848**

• ZHOU QIUMEI: "DEVELOPMENT AND
APPLICATION OF AN ARTIFICIAL EXPERT
SYSTEM FOR THE PRESSURE TRANSIENT
ANALYSIS OF A DUAL-LATERAL WELL
CONFIGURATION", 1 August 2013 (2013-08-01),
XP093194804, Retrieved from the Internet
<URL:https://etda.libraries.psu.edu/files/
final_submissions/8476> [retrieved on 20240813]

- FENG XIN ET AL: "A Deep-Learning-Based Oil-Well-Testing Stage Interpretation Model Integrating Multi-Feature Extraction Methods", ENERGIES, vol. 13, no. 8, 20 April 2020 (2020-04-20), CH, pages 2042, XP093194845, ISSN: 1996-1073, DOI: 10.3390/en13082042
- KOCH GREGORY ET AL: "Siamese Neural Networks for One-shot Image Recognition", 2 ND INTERNATIONAL CONFERENCE ON MACHINE LEARNING, vol. 37, 1 January 2015 (2015-01-01), XP093194848
- VAFERI BEHZAD ET AL: "Hydrocarbon reservoir model detection from pressure transient data using coupled artificial neural network-Wavelet transform approach", APPLIED SOFT COMPUTING, ELSEVIER, AMSTERDAM, NL, vol. 47, 4 June 2016 (2016-06-04), pages 63 - 75, XP029661645, ISSN: 1568-4946, DOI: 10.1016/J.ASOC.2016.05.052
- NAGARAJ GURU ET AL: "Deep Similarity Learning for Well Test Model Identification", 15 December 2021 (2021-12-15), XP093194832, Retrieved from the Internet <URL:https://onepetro.org/SPEMEOS/proceedings-pdf/doi/10.2118/204675-MS/2547189/spe-204675-ms.pdf> [retrieved on 20240813], DOI: 10.2118/204675-MS
- VAFERI BEHZAD; ESLAMLOUEYAN REZA; GHAFFARIAN NAJMEH: "Hydrocarbon reservoir model detection from pressure transient data using coupled artificial neural network—Wavelet transform approach", APPLIED SOFT COMPUTING, ELSEVIER, AMSTERDAM, NL, vol. 47, 4 June 2016 (2016-06-04), AMSTERDAM, NL , pages 63 - 75, XP029661645, ISSN: 1568-4946, DOI: 10.1016/j.asoc.2016.05.052
- CHU HONGYANG, LIAO XINWEI, DONG PENG, CHEN ZHIMING, ZHAO XIAOLIANG, ZOU JIANDONG: "An Automatic Classification Method of Well Testing Plot Based on Convolutional Neural Network (CNN)", ENERGIES, vol. 12, no. 15, pages 2846, XP055931948, DOI: 10.3390/en12152846

**Description**

BACKGROUND

Pressure transient analysis (PTA), a form of well test analysis, is a powerful tool for well and reservoir characterization. Based on PTA data recorded from a well, an appropriate physics model may be identified and parameterized to obtain a PTA model that reflects the PTA data recorded from the well. Manually identifying a physics model, and parameterizing the physics model are tedious tasks.

Zhou Quimei: "Development and application of an artificial expert system for the pressure transient analysis of a dual-lateral well configuration", 1 August 2013, describes building generating a forward ANN model to generate PTA data and estimate whether the surface flow rate is reasonable for a specified reservoir and an inverse ANN model to determine permeability and porosity for the specified reservoir with dual lateral wells. Feng Xin et al: "A deep-learning-based oil-well-testing stage interpretation model integrating multi-feature extraction methods", Energies, vol 13, no 8, 20 April 2020, page 2042, proposes an integrated well-testing interpretation model based on a multi-feature extraction method and deep mutual information classifiers (MFE-DMIC). The initial features are obtained by classical feature extraction methods and feature redundancies are eliminated using a deep belief network and united the maximum information coefficient method to achieve feature purification. Finally, interpretation results are calculated using a hybrid particle swarm optimization-support vector machine classification system. Koch Gregory et al: "Siamese Neural Networks for one-shot image recognition", 2nd International Conference on Machine Learning, vol 37, 1 January 2015, describes a method for learning siamese neural networks to rank similarity between inputs and achieve strong results with near state-of-the-art performance on one-shot classification tasks. Vaferi Behzad et al: "Hydrocarbon reservoir model detection from pressure transient data using coupled artificial neural network-Wavelet transform approach", Applied Soft Computing, Elsevier, Amsterdam, NL, vol 47, 4 June 2016, pages 63-75, describes using a discrete wavelet transform (DWT) for reducing the amount of long-term reservoir pressure data obtained for eight different reservoir models. Nagaraj Guru et al: "Deep Similarity learning for Well test model identification", Day 2, Mon, 29 November 2021, (online) 15 December 2021, describes a framework to solve the geological profile similarity estimation based on a deep learning model. Well-logging data is taken as input and provides the similarity of wells as output.

SUMMARY

The present invention resides in a computer-implemented method as defined in claim 1, a system as defined in claim 8 and a computer program product as defined in claim 9. Preferred embodiments ae defined in the dependent claims.

Other aspects will be apparent from the following description and the appended claims.

BRIEF DESCRIPTION OF DRAWINGS

FIG. 1 shows a diagram of a hydrocarbon field in accordance with disclosed embodiments.

FIG. 2 schematically shows a pressure transient analysis in accordance with disclosed embodiments.

FIG. 3 shows a diagram of a system in accordance with disclosed embodiments.

FIG. 4 shows a diagram of a Siamese neural network in accordance with disclosed embodiments.

FIG. 5 shows a diagram of a system in accordance with disclosed embodiments.

FIG. 6 shows a diagram of a training configuration in accordance with disclosed embodiments.

FIG. 7 and FIG. 8 show flowcharts in accordance with disclosed embodiments.

FIGs. 9A and 9B show examples in accordance with disclosed embodiments.

FIG. 10A and FIG. 10B show computing systems in accordance with disclosed embodiments.

DETAILED DESCRIPTION

Specific embodiments will now be described in detail with reference to the accompanying figures. Like elements in the various figures are denoted by like reference numerals for consistency.

In the following detailed description of embodiments of the technology, numerous specific details are set forth in order to provide a more thorough understanding. However, it will be apparent to one of ordinary skill in the art that various embodiments may be practiced without these specific details. In other instances, well-known features have not been described in detail to avoid unnecessarily complicating the description.

Throughout the application, ordinal numbers (*e.g.,* first, second, third, *etc.*) may be used as an adjective for an element (*i.e.,* any noun in the application). The use of ordinal numbers is not to imply or create any particular ordering of the elements nor to limit any element to be a single element unless expressly disclosed, such as by the use of the terms "before", "after", "single", and other such terminology. Rather, the use of ordinal numbers is to distinguish between the elements. By way of an example, a first element is distinct from a second element, and the first element may encompass more than one element and succeed (or precede) the second element in an ordering of elements.

In general, embodiments of the disclosure use machine learning models to perform a well test analysis. A two-step approach relying on two separate machine learning models may be used for the well test analysis. In the first step, classes of physics models are suggested using a first machine learning model. The suggested classes of physics models are picked based on being potentially suitable to represent pressure transient analysis (PTA) data obtained from a well. In the second step, physics model parameters associated with the class of physics models identified in the first step are estimated using a second machine learning model. After completion of the two-step approach, a parameterized physics model, based on the PTA data obtained from the well, may be available for further analysis.

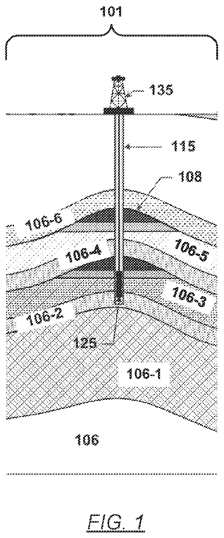

Turning now to the figures, FIG. 1 depicts a schematic view, partially in cross section, of an onshore field (101). Alternatively, there may be an offshore field. One or more of the modules and elements shown in FIG. 1 may be omitted, repeated, and/or substituted. Accordingly, embodiments should not be considered limited to the specific arrangement of modules shown in FIG. 1.

As shown in FIG. 1, the field (101) includes a geologic sedimentary basin (106), a wellbore (115), a data acquisition tool (125), and a well rig (135). The geologic sedimentary basin (106) contains subterranean formations. As shown in FIG. 1, the subterranean formations may include several geological layers (106-1 through 106-6). As shown, the formation may include a basement layer (106-1), one or more shale layers (106-2, 106-4, 106-6), a limestone layer (106-3), a sandstone layer (106-5), and any other geological layer. The geologic sedimentary basin includes rock formations and may include at least one reservoir including fluids, for example the sandstone layer (106-5). The rock formations may include at least one seal rock, for example, the shale layer (106-6), which may act as a top seal. The rock formations may include at least one source rock, for example the shale layer (106-4), which may act as a hydrocarbon generation source. The geologic sedimentary basin (106) may further contain hydrocarbon or other fluids accumulations associated with certain features of the subsurface formations. For example, accumulation (108) associated with structural high areas of the reservoir layer (106-5) and containing gas, oil, water or any combination of these fluids. A data acquisition tool (125) may be positioned anywhere in the wellbore (115) to collect data such as pressure measurements from within the wellbore. Additional data being collected includes but is not limited to production rates. The collected data may be used for a well test analysis.

Well test analysis deals with understanding reservoir characteristics with principles of fluid flow in porous rock. Using well test analysis, various parameters associated with the well and/or the reservoir may be determined. Plots of pressure and the derivative of pressure against time may be used to perform a well test

analysis. To obtain data for the plots, a pressure transient analysis (PTA) may be performed, by pressurizing the well to be analyzed, shutting the well, and measuring the pressure over time (e.g. over hours, days, weeks, etc.). The PTA may provide information about well and reservoir performance (e.g., in the form of a permeability-thickness (KH value) and a skin factor (S value), hydraulic connectivity over a large volume, average reservoir pressure, etc.

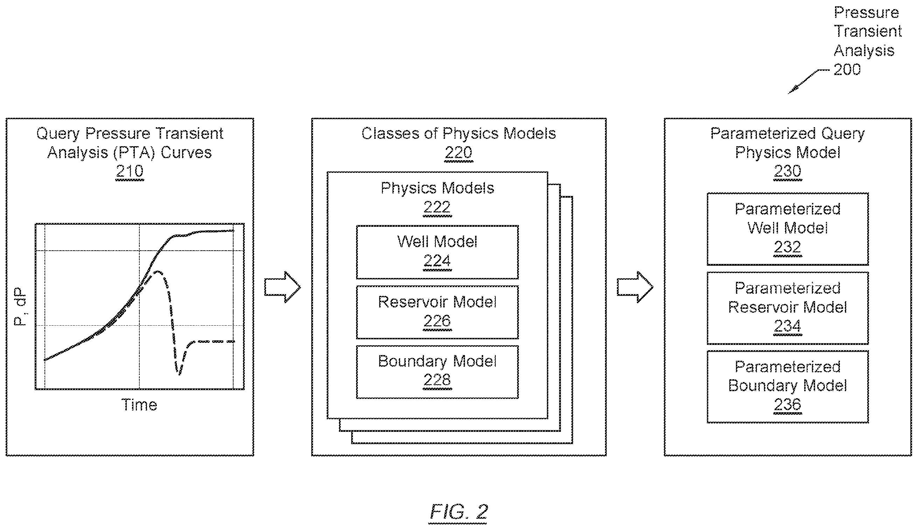

FIG. 2 schematically shows a pressure transient analysis (PTA). In the PTA (200), query PTA curves (210) are used as an input to select a suitable class of physics models from classes of physics models (220). A suitable class of physics models is likely to be able to accommodate a physics model reflecting the query PTA curves (210), in contrast to other classes of physics models that are unlikely to be able to accommodate a physics model reflecting the query PTA curves (210). The query PTA curves may have been obtained from a well having been queried (i.e., a well from which pressure/pressure derivative measurements were obtained). To cover a variety of different well/reservoir/boundary combinations, physics models (222) may be organized in different classes of physics models (220). Each of the physics models in a class may be parameterized in a similar but not identical manner (e.g. having the same model parameters (discussed below), but parameter values that vary within a certain range), whereas physics models belonging to different classes may be parameterized differently (e.g., having different model parameters and/or different parameter values). For example, physics models in a class representing horizontal wells may be parameterized very differently than physics models in a class representing vertical wells. Accordingly, physics models in the same class may be associated with PTA curves that are more similar than PTA curves associated with physics models in different classes. However, in certain scenarios, the PTA curves may also be similar for physics models in different classes, which may result in a non-uniqueness of the problem associated with selecting a class of physics models. After the selection of a class of physics models, a physics model according to the selected class of physics models is parameterized to obtain a parameterized query physics model (230) that reflects the characteristics of the query PTA curves (210). The PTA (200) may involve three operational stages as follows.

In the first operational stage, in one or more embodiments, an identification of a class of physics models from multiple classes of physics models (220) based on the query PTA curves (210) is performed. The identification of the class of physics models may be considered an inverse problem. The physics model when executed (forward problem) outputs PTA data that may be displayed in the form of PTA curves. In contrast, in the inverse problem in (1), PTA curves serve as the input to select a suitable class of physics models from the classes of physics models (220). A physics model (222) may represent the overall behavior of a reservoir. The physics model (222) may use a physical description (e.g., type of rock, depth, pressure, size, type of fluid, fluid content etc.) to predict a dynamic behavior (e.g., pressure over time, in a PTA). A physics model may include multiple components. For example, a physics model may include a well model (224), a reservoir model (226), and/or a boundary model (228).

The well model (224) may capture near-wellbore effects that may vary from well to well. For example, the well model may establish whether the well is a horizontal or a vertical well, whether it has been fully completed, etc. Data points of the query PTA curves (210) captured during earlier times, may be associated with the near-wellbore effects.

The reservoir model (226) may capture the dynamic behavior of the reservoir. The dynamic behavior of the reservoir may be assumed to be identical for across the wells connected to the reservoir. For example, the permeability, which may depend on the type of rock in the reservoir may be part of the reservoir model (226). Data points of the query PTA curves (210) captured during middle times, may be associated with the dynamic behavior of the reservoir.

The boundary model (228) may capture the nature of reservoir boundaries (e.g., established by geological folds) that may be the same for the wells connected to the reservoir. The effect of the reservoir boundaries on the query PTA curves (210) may depend on the distance of the well from the reservoir boundaries. Data points of the query PTA curves (210) captured during late times, may be associated with the nature of the reservoir boundaries.

In the second operational stage, in one or more embodiments, the parameterized query physics model (230) is obtained by calculating parameters for a physics model according to the selected class of physics models. The parameterized query physics model (230), thus, includes a parameterized well model (232), a parameterized reservoir model (234), and a parameterized boundary model (236). The calculating of the parameters is considered forward or direct, because the calculating involves executing the physics model with sets parameters to output data for generating PTA curves.

The third operational stage includes the following. In one or more embodiments, the obtained parameterized query physics model (230) is verified. Simulated PTA curves may be generated based on the output of the parameterized query physics model (230) and compared to the PTA curves (210) obtained from the well. A good match between simulated PTA curves and the PTA curves associated with the well suggest that the parameterized query physics model (230) has been properly selected and parameterized. The quality of the match may be assessed, for example, using an error function. As further discussed below, machine learning methods may be used to assess the quality of the match.

A system for performing the above three operational stages is subsequently described. Following the description of the system, methods that implement the three steps are described.

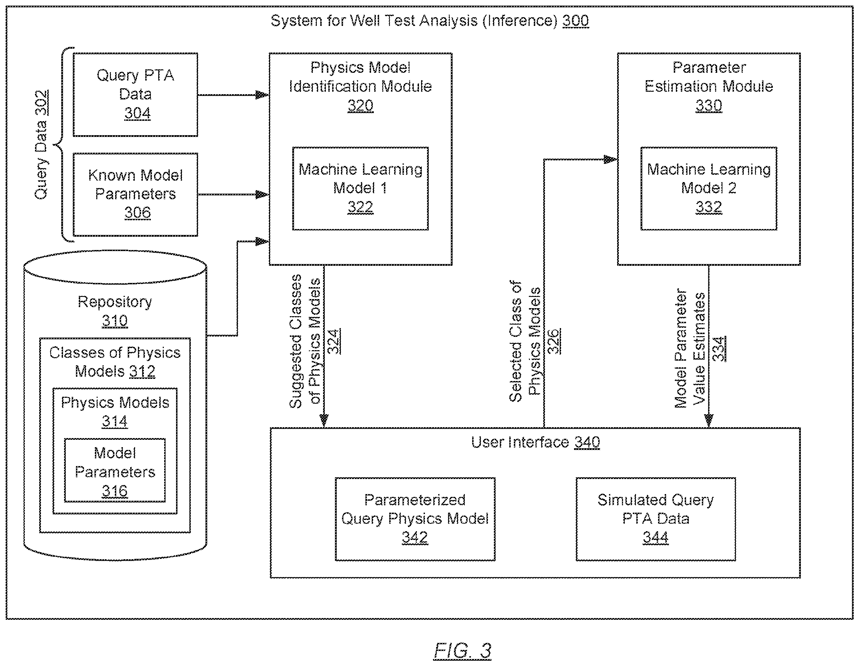

FIGs. 3, 4, 5, and 6 show diagrams of embodiments that are in accordance with the disclosure. The various elements, systems, and components shown in FIGs. 3, 4, 5, and 6 may be omitted, repeated, combined, and/or altered as shown from FIGs. 3, 4, 5, and 6. Accordingly, the scope of the present disclosure should not be considered limited to the specific arrangements shown in FIGs. 3, 4, 5, and 6.

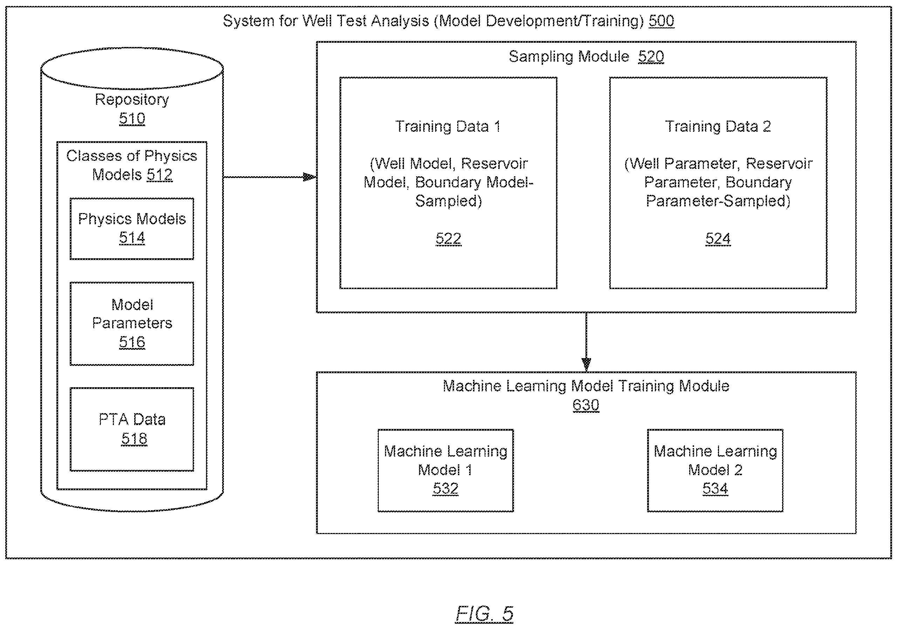

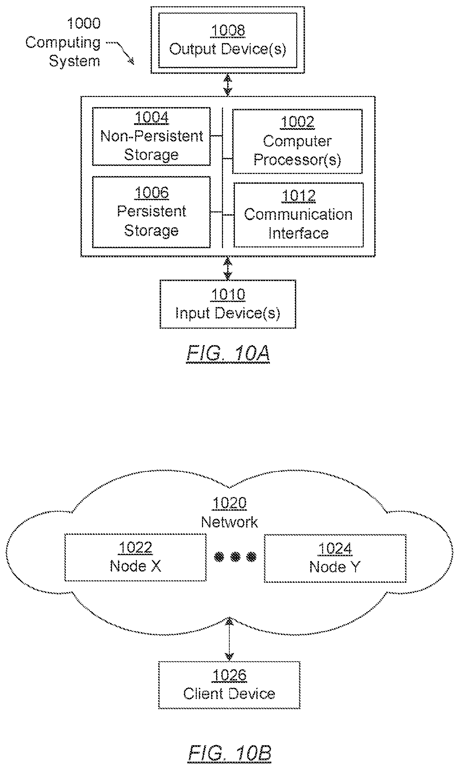

FIG. 3 schematically shows a system for well test analysis, in accordance with one or more embodiments. The system (300) is shown in an inference configuration that includes two stages. The system (300) may reside on a computing system as described below in FIG. 10A and 10B. Broadly speaking, in the first stage, a physics model is selected, and in the second stage, the selected physics model is parameterized. The first and the second stages operate on query data. The query associated with the query data may be for a well and a reservoir as previously described. In one or more embodiments, the system (300) includes machine learning models. A description of a system for training the machine learning models is provided below in reference to FIG. 5.

Turning to FIG. 3, the system (300) includes a repository (310), a physics model identification module (320), a parameter estimation module (330), and a user interface (340). The system also includes query data (302). Each of these components is subsequently described.

In one or more embodiments, the query data (302) includes query PTA data (304). The query PTA data (304), may be based on measurements obtained from a well and may include measurements of pressure over time, including derivatives of the pressure over time, as described in reference to FIG. 1. The measurements may be displayed in a plot.

The query data (302) may further include known model parameters (306). The known model parameters may include parameters of the well and/or reservoir that are already known, e.g., as a result of measurements or based on the design of the well. Known model parameters may include, but are not limited to, well data (e.g., well geometry, radius, etc.), rock parameters associated with the reservoir (e.g., thickness, porosity, compressibility, etc.), fluid parameters associated with the well (e.g., viscosity, formation volume factor, etc.).

In one or more embodiments, the query data (302) is an input to the physics model identification module (320). The query data (302) may be provided by a user, or the query data may be retrieved from a repository.

The repository (310), in one or more embodiments, stores a set of physics models (314). The repository (310) may be any type of repository suitable for storing the set of physics models (312). The repository (310) may reside in a nonvolatile memory and/or in a volatile memory. Each physics model of the set of physics models (314) may include a well model, a reservoir model, and/or a boundary model, as previously described in reference to FIG. 2. The well model, the reservoir model, and/or the boundary model are parameterized using model parameters (316). Each model parameter may have a corresponding parameter value. Some model parameters may be considered known model parameters, i.e., model parameters with known parameter values. The known model parameters may be obtained from various sources such as well logs, fluid analyses, drilling reports, etc. An estimation of the known parameter values for the known model parameters is, thus, not necessary. When performing parameter estimations, as described below, the known parameter values may serve as inputs to the physics model used in the parameter estimation. Each of the physics models (314) may be associated with PTA curves, and each of the physics models may have been obtained from wells/reservoirs that previously underwent a PTA analysis. To cover a variety of different well/reservoir/boundary combinations, the physics models (314) may be organized into classes of physics models (312). The physics models (314) may be organized, for example, into fourteen classes of physics models. As described in reference to FIG. 2, physics models in the same class tend to parameterized in a similar but not identical manner, whereas physics models in different classes tend to be parameterized differently.

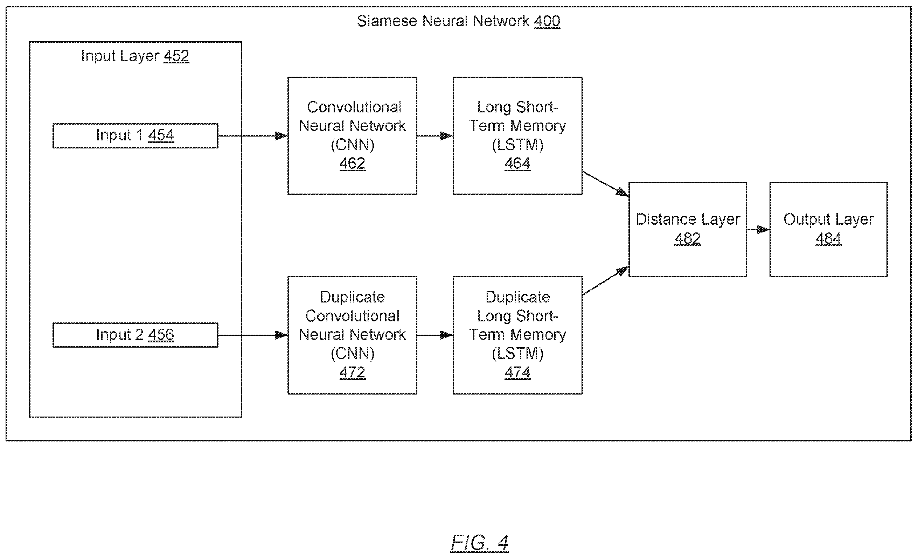

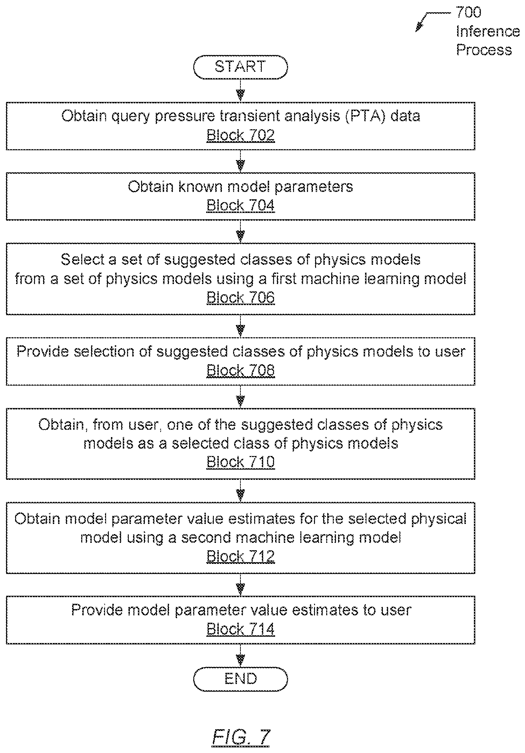

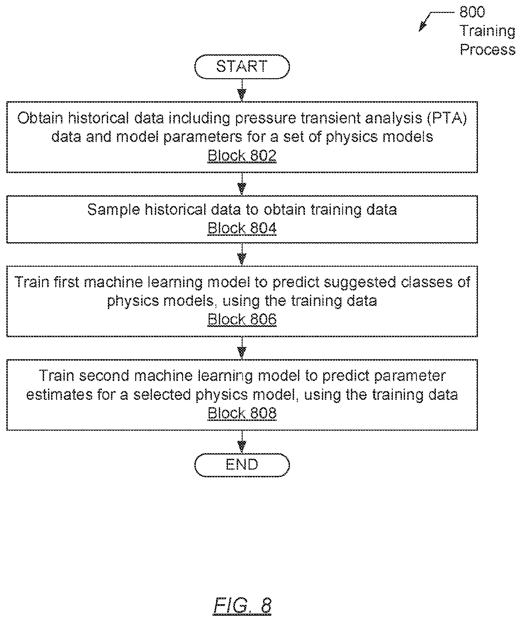

The physics model identification module (320), in one or more embodiments, operates on the query data (302) to select suggested classes of physics models (324) from the classes of physics models (312), based on whether the classes of physics models (312) have a high probability of being good candidates for accommodating a physics model associated with the query data (302). In one or more embodiments, the physics model identification module relies on a machine learning model (322), which assess each of the classes of physics models (312) based on probabilities of the classes being able to accommodate a physics model associated with the query data (302). The physics model identification module (320) may rank the classes of physics models (312), based on probability values computed for the classes of physics models. A probability value may be computed for each of the classes of physics models (312) by the machine learning model (322). Suggested physics models (324) with a high probability value may be provided to a user interface (340), enabling the user to pick a selected physics model (326) from the suggested physics models (324). The operations performed by the physics model identification module (320) are described below in reference to the flowchart of FIG. 7. In one or more embodiments, the machine learning model (322) has been previously trained. The system used for training is described below in reference to FIG. 5. Further, the operations performed for the training are described in reference to the flowchart of FIG. 8. The machine learning model (322) is described in reference to FIGs. 4 and 5.

The parameter estimation module (330), in one or more embodiments, operates on the selected class of physics models (326) to obtain model parameter value estimates (334) for a physics model according to the selected class of physics models (326). In one or more embodiments, a machine learning model (332) is used to obtain the model parameter value estimates (334). The model parameter value estimates (334) are for a physics model according to the selected class of physics models (326). A parameterized query physics model (342) may be obtained using the model parameter value estimates (334). The parameterized query physics model (342) may produce simulated PTA data (344) that matches the query PTA data (304) to a desired degree, when executing the machine learning model (326) using the model parameter value estimates (334). Further, the simulated query PTA data (344) may also be similar to PTA data associated with other physics models in the selected class (i.e., more similar in comparison to PTA data associated with physics models in other classes). The operations performed by the parameter estimation module (330) are described below in reference to the flowchart of FIG. 7. In one or more embodiments, the machine learning model (332) has been previously trained. The system used for training is described below in reference to FIG. 5. Further, the operations performed for the training are described in reference to the flowchart of FIG. 8. The machine learning model (332) is described in reference to FIGs. 4 and 5.

The user interface (340), in one or more embodiments, provides the user of the system (300) with the model parameter value estimates (334) for a physics model associated with the selected class of physics models (326). In other words, the user interface (340) may provide a parameterized query physics model (342). The user interface may accept input by the user, for example, updated parameter values of the parameterized query physics model (342), tweaked by the user. A parameterized query physics model (342) may later become part of the training data for training the machine learning models (322, 332), as discussed below. Accordingly, the expertise of the user tweaking the parameterized query physics model (342) may potentially result in improved performance of the machine learning models (322, 332).

The user interface (340) may also provide data visualizations to the user. For example, the user interface may display the query PTA data (304), e.g., in the form of a plot. The user interface may also display the simulated query PTA data (344), e.g., in the form of a plot. The simulated query PTA data (344) and the query PTA data (304) may be shown in the same plot, allowing a user to assess the parameterized query physics model based on the goodness of fit. The user interface may be a local or remote interface. If remote, the display may be transmitted for display on a user's local device.

The user interface may further allow the user to pick the selected class of physics models (326) from the suggested classes of physics models (324). The involvement of the user in picking the selected class of physics models (326) may be beneficial because of the non-uniqueness of the problem associated with identifying a physics model including model parameter estimates. For example, a first physics model parameterized with a first set of model parameter estimates may produce first simulated PTA data. A second physics model parameterized with a second set of model parameter estimates may produce second simulated PTA data. Both the first and the second simulated PTA data may match the query PTA data to a reasonable degree. Yet, one of the two selected models may not properly reflect the actual physics of the well/reservoir/boundaries. A user may rule out the incorrect physics model, based on, for example, expertise, background knowledge, trial and error, etc., by picking the selected class of physics models (326) from the suggested classes of physics models.

As previously noted, the system (300) relies on machine learning models (322, 332). In one or more embodiments, the machine learning models (322, 332) are based on Siamese neural networks. The following description is for Siamese neural networks in general, but also includes a discussion of the specific implementation in the machine learning models (322, 332). Other neural networks, different from Siamese neural networks, may be used, without departing from the disclosure.

Turning to FIG. 4, the Siamese neural network (400) generates result outputs that identify the similarity between input 1 (454) and input 2 (456) using multiple layers. The Siamese neural network (400) may include the input layer (452), a convolutional neural network (CNN) (462), a long short-term memory (LSTM) (464), a duplicate convolutional neural network (CNN) (472), a duplicate long short-term memory (LSTM) (474), the distance layer (482), and the output layer (484).

The input layer (452) receives the inputs for the Siamese neural network (400), which include input 1 (454) and input 2 (456). Depending on how the Siamese neural network (400) is trained (as discussed below), the Siamese neural network (400) may be used to implement machine learning model 1 (322) and machine learning model 2 (332), in FIG. 3. Accordingly, what input 1 (454) is, and what input 2 (456) is, depends on whether the Siamese neural network (400) is operating as machine learning model 1 (322) or machine learning model 2 (332).

When the Siamese neural network is configured to operate as machine learning model 1 (322), input 1 (454) may be the query PTA data (304), and input 2 (456) may be simulated PTA data produced by one of the physics models (314) in a class of physics models (312) (or vice versa). In this configuration, the output of the Siamese neural network (400) may be a probability indicating the likeliness that the query PTA data (304) is represented by the physics model in the class of physics models (312) with a desired accuracy.

When the Siamese neural network is configured to operate as machine learning model 2 (332), input 1 (454) may be the query PTA data (304), and input 2 (456) may be simulated PTA data produced by a physics model according to the selected class of physics models (326) parameterized using a set of parameters (or vice versa). In this configuration, the output of the Siamese neural network (400) may be a probability indicating the likeliness that the query PTA data (304) is properly represented by the model parameter value estimates applied to a physics model according to the selected class of physics models (326).

The CNN (462) may operate on the input (454) to extract features. The LSTM (464) may operate on the output of the CNN (462) to aggregate the extracted features, thereby mapping the input 1 (454) to a vector.

The duplicate convolutional neural network (472) is the same as the convolutional neural network (462). The duplicate convolutional neural network (462) has the same number and type of layers with the same weights as the convolutional neural network (462). The input to the duplicate convolutional neural network (472) is input 2 (456).

The distance layer (482) generates a value that identifies a distance between the outputs of the LSTM (464) and the duplicate LSTM (474). A number of different distance functions may be used. An equation below is an example which may be used to identify the distance between outputs of the LSTM (464) and the duplicate LSTM (474).

$$\text{Distance} = \text{Mean}(\text{abs}(X1\text{-}X2)) \qquad\qquad \text{Eq. (1)}$$

The equation above takes the mean of the absolute value of the differences between the output of the LSTM (464), represented as X1, and the output of the duplicate LSTM (474), represented as X2, to generate a single scalar value in the interval of $[0, +\infty)$.

The output layer (484) generates the output of the Siamese neural network (400) from the output of the distance layer (482). An equation below is an example which may be used to generate the output, which is within the interval (0, 1] and may be a single probability value of one dimension.

$$\text{Output} = e^{(\text{-abs(Distance)})} \qquad\qquad \text{Eq. (2)}$$

FIG. 5 schematically shows a system for well test analysis, in accordance with one or more embodiments. The system (500) is shown in a training configuration for training the machine learning models (532, 534). Once trained, the machine learning models (532, 534) may be used by the system (300) of FIG. 3 as the machine learning models (322, 332). The system (500) includes a repository (510), a sampling module (520), and a machine learning training module (530). Each of these components is subsequently described.

The repository (510) may be similar to the repository (310) of FIG. 3 and may store physics models (514) and model parameters (516) including associated parameter values, organized by classes of physics models (512). The data in the repository may have been obtained from previously conducted well test analyses and may be used to generate training data for the training of the machine learning models (532, 534), as described below. The repository may further include PTA data (518) associated with the physics models (514). The PTA data may be recorded and/or forward-simulated.

The sampling module (520), in one or more embodiments, provides a data generator framework that generates synthetic training data for machine learning model learning based on a sampling of the physics models (514), and a sampling of the model parameters (516). The sampling module (520), thus, provides the labeled samples needed for training the machine learning models (532, 534). As previously discussed in reference to FIG. 4, the machine learning models (532, 534) provide estimates for similarity. To provide such estimates, a large amount of labeled training data may be often used. Because collecting manually labeled data is laborious, costly and time consuming, a self-supervised learning strategy is used, in accordance with one or more embodiments. The self-supervised learning strategy involves synthetically generating labels through data transformations to enable subsequent supervised training.

A design of experiments (DOE)-based approach is adopted utilizing the physics models for well, reservoir and boundary types. In the DOE-based approach, various shapes of PTA curves are generated by sampling across physics models and model parameters. The DOE-generated curves are used as training data by the machine learning model training module (530). Using the DOE-based approach, positive and negative pairs of training samples (in the form of the DOE-generated curves) are obtained. A different type of sampling is performed to generate training data (522) for training machine learning model 1 (532) and to generate training data (524) for training machine learning model 2 (534).

Training data (522) for the training of the machine learning model 1 (532) may be obtained as follows. First, for a randomly chosen class of physics model, PTA data is randomly selected. A transformation such as compression/expansion and/or adding zero mean Gaussian noise to the PTA data may be performed, and a positive training pair may be formed with a second set of PTA data obtained in the same manner, from the same class. A negative training pair may be formed by randomly choosing two PTA responses from different classes. The selection of positive and negative training pairs may be repeated many times to generate a sufficient amount of training data. FIG. 8 further illustrates the obtaining of training data, and the training itself.

Training data (524) for the training of the machine learning model 2 (534) may be obtained analogous to how the training data (522) is obtained. However, the sampling is performed within classes of physics models. Accordingly, separate training data (524) may be obtained for the different classes of physics models. For a given class of physics model, PTA data is randomly selected by sampling model parameters, such as permeability, horizontal well length, skin factor, distance to the boundary, etc. Corresponding PTA curves are generated.

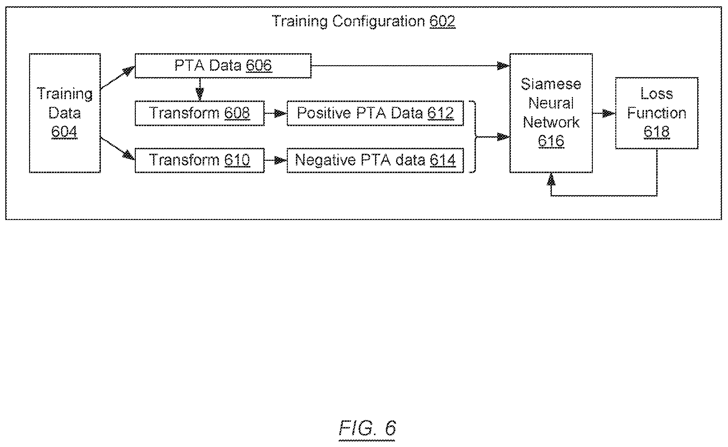

The machine learning model training module (530), in one or more embodiments, trains machine learning model 1 (532), and machine learning model 2 (534), using training data 1 (522) and training data 2 (524), respectively. The elements of the machine learning model training module (530) are subsequently describe in reference to FIG.6.

Turning to FIG. 6, a training configuration (602) is shown. The training configuration (602) may be applicable to the training of machine learning model 1 (632) and machine learning model 2 (634) in FIG. 6. Whether the training configuration (602) is used for the training of machine learning model 1 (632) or machine learning model 2 (634) depends on the training data (604), which may be either training data 1 (522) or training data 2 (524) in FIG. 5. In one or more embodiments, the training configuration (602) trains the Siamese neural network (616) to recognize the similarity between the PTA data (606) and the positive PTA data (612) and to differentiate the PTA data (606) from the negative window (614).

The training data (604) includes PTA data including pressure measurements over time and the derivative of the pressure measurements over time. The training data (604) is generated as described in reference to FIG. 5. The training data (604) may be based on historical PTA data stored in a repository that maintains multiple well logs from multiple wells.

The PTA data (606) is selected from the training data (604). The training configuration (602) may iterate through the training data (604) as described in reference to FIG. 5, to train the Siamese neural network (616) with individual PTA data selected from the training data (604).

The transform (608) may be applied to the PTA data (606) to generate the positive PTA data (612). The transform (608) may modify the data from the PTA data (606) by resampling, resizing, realigning, adding noise, *etc.* to generate the positive PTA data (612).

For the negative PTA data (614), PTA data that is different from the PTA data (606) may be selected from the training log (404) as described in reference to FIG. 6. The transform (610) may be applied to generate the negative PTA data (614). The transform (610) may modify the data from the training data (604) by resampling, resizing, realigning, adding noise, *etc.* to generate the negative PTA data (614).

The Siamese neural network (616) receives the PTA data (606). The Siamese neural network (616) also receives one of the positive PTA data (612) and the negative PTA data (614). The Siamese neural network (616) generates an output from the PTA data (606) and the positive or negative PTA data (612 or 614). The Siamese neural network output indicates the similarity between the PTA data (606) and the positive or negative PTA data (612 or 614).

The loss function (618) compares the Siamese neural network output to a label assigned to the positive or negative PTA data (612 or 614). For the positive PTA data (612), the label may be "1" or true. For the negative PTA data (614), the label may be "0". Backpropagation may be used to update the Siamese neural network (616) based on the difference between the Siamese neural network output and the label.

FIG. 7 and FIG. 8 show flowcharts of the inference process (700) and the training process (800), respectively, in accordance with the disclosure. While the various blocks in the flowcharts are presented and described sequentially, one of ordinary skill will appreciate that at least some of the blocks may be executed in different orders, may be combined or omitted, and at least some of the blocks may be executed in parallel. Furthermore, the blocks may be performed actively or passively. For example, some blocks may be performed using polling or be interrupt driven. By way of an example, determination blocks may not have a processor process an instruction unless an interrupt is received to signify that condition exists. As another example, determinations may be performed by performing a test, such as checking a data value to test whether the value is consistent with the tested condition.

Turning to FIG. 7, the inference process (700) relies on machine learning framework to perform a well test interpretation. Generally speaking, query PTA data is fed into trained machine learning models to identify a suitable class of physics models and to obtain model parameter value estimates for a physics model according to the class of physics models, based on the PTA data.

In Block 702, query PTA data is obtained, as previously described. The obtaining of the query PTA data may include additional operations such as preprocessing the query PTA data, including smoothening, denoising, etc.

In Block 704, known model parameters are obtained. Known model parameters may include any information to be used to identify and/or parameterize a physics model. Known model parameters may include, for example, well data (radius, geometry), rock parameters (thickness, porosity, compressibility), and/or fluid parameters (viscosity, formation volume factor), etc. Known model parameters may be obtained from various external sources such as well logs, fluid analyses, drilling reports, etc.

In Block 706, a set of suggested classes of physics models is selected from classes of physics models. The classes of physics models may be located in a repository. Any number of classes of physics models may exist (e.g., fourteen classes) that have been established based on, for example, well model, reservoir model, and boundary model characteristics.

In one or more embodiments, the suggested classes of physics models are selected using a machine learning model (machine learning model 1 (322) in FIG. 3). The machine learning model may have been trained as described below in reference to FIG. 7. The machine learning model used to perform the operations of Block 706 may be a Siamese neural network as described in reference to FIGs. 4 and 5.

A suggested class of physics model may be selected as follows. Assume that each class of physics models includes multiple physics models, each associated with PTA data. The Siamese neural network may perform a comparison of each of the PTA data of the physics models with the query PTA data. The best match is identified. When performing these operations for each class of physics models, a best match is available for each class of physics models. Subsequently, the best matches of the classes of physics models are ranked, from highest degree of match to lowest degree of match. The classes of physics models associated with the highest ranking may be picked as the suggested classes of physics models. A fixed number of classes may be picked, or classes with a match exceeding a specified threshold may be picked.

In Block 708, the suggested classes of physics models are provided to the user via a user interface.

In Block 710, a selected class of physics models is obtained. The selection may be made by the user picking one of the suggested classes of physics models, in the user interface. The user interface detects a selection of the class.

Blocks 708 and 710 may be omitted in a system configured to provide one suggested class of physics models.

In Block 712, model parameter value estimates are obtained. The model parameter value estimates may be used to form a parameterized query physics model, of the selected class of physics models. In one or more embodiments, the parameter estimation is performed by a machine learning model (machine learning model 2 (332) in FIG. 3). The machine learning model may have been trained as described below in reference to FIG. 8. The machine learning model used to perform the operations of Block 712 may be a Siamese neural network as described in reference to FIGs. 4 and 5, or any other machine learning model suitable for parameter value estimation. Different machine learning models may be used to perform the operations of Block 712, depending on the selected class of physics models. Different machine learning models may be used because different classes of physics models may have different model parameters. For example, the class of physics models representing the combination of a constant horizontal well, a homogenous reservoir, and an infinite boundary may have the parameters pressure, permeability, well length, anisotropy, wellbore storage & skin. In contrast, the class of physics models representing the combination of a constant vertical well, a homogenous reservoir, and an intersecting fault boundary may have an additional parameter for the boundary distances. Either a set of previously trained machine learning models (one for each class of physics models) or a unified machine learning model covering all classes of physics models may be used for the parameter estimation.

The model parameter value estimates may be obtained as follows. Within the selected class of physics models, physics models including model parameter values may be selected for comparison by the Siamese neural network. The Siamese neural network may perform the comparison of the query PTA data with each of the PTA data associated with the physics models belonging to the selected class. The best match is identified. The model parameter values associated with the physics model that produced the best match are used as the model parameter value estimates. The known model parameters, obtained by the operations of Block 704, may serve as inputs to the model parameter value estimation.

In Block 714, the model parameter value estimates are provided to the user, e.g., in a user interface. As discussed in reference to FIG. 3, the user may tweak the model parameter values as desired. Through forward simulation, the user may see the effect of the tweaking, e.g., in a plot of the simulated query PTA data. Eventually, the user may decide to store the resulting physics model in the repository. Future training of the machine learning algorithms may then be performed under consideration of the newly added physics model.

Turning to FIG. 8, the training process (800) is used to obtain the machine learning models required for the execution of the inference process (800) of FIG. 8. The training process (800) may be performed prior to a first execution of the inference process (800), and/or when new training data becomes available (e.g., after the user tweaks model parameters for a physics model established based on newly obtained query PTA data. The flowchart of FIG. 8 summarizes the operations previously described with reference to FIGs. 5 and 6.

In Block 802, historical data is obtained. The historical data includes PTA data. The historical data is labeled and may have been obtained using the inference process (800) or other methods. For each set of PTA data, the class of physics model and the model parameters are known.

In Block 804, the historical data is sampled to obtain training data. The sampling is performed using a design of experiments (DOE)-based approach, previously described in reference to FIG. 6. The sampling is different, depending on whether the machine learning model for physics model classification (machine learning model 1 (632)) or the machine learning model for parameter estimation (machine learning model 2 (634)). Specifically, a well, reservoir and boundary type-sampling is performed across the different classes of physics models to obtain training data for the training of machine learning model 1 (632), suitable for physics model classification. A parameter-type sampling is performed within classes of physics models to obtain training data for the training of machine learning model 2 (634), suitable for parameter estimation. Based on the sampling, various shapes of PTA curves (PTA data) are generated using forward simulation.

In Blocks 806 and 808, the machine learning models 1 and 2 (632, 634) are trained to predict suggested classes of physics models, based on the training data obtained by the sampling of Block 804. Broadly speaking, the PTA data to be used as training data, obtained in Block 804 may undergo additional processing to generate positive and negative PTA data. Next, the Siamese neural network is trained using the PTA data, the positive PTA data, and the negative PTA data. The training may be performed using backpropagation with the convolutional network and the duplicate convolutional network receiving similar updates, and the long short-term memory and the duplicate long short-term memory receiving similar updates. The updates may be backpropagated to the convolutional neural network and the long short-term memory, and the weights of the convolutional neural network and the long short-term memory may be copied to the duplicate convolutional neural network and the duplicate long short-term memory, respectively. Additional details are provided in the description of FIGs. 5 and 6. As previously noted, different machine learning models may be used for the different classes of physics models. Accordingly, the training may be performed for multiple machine learning models 2 (634) to perform parameter value estimations for the different classes of physics models.

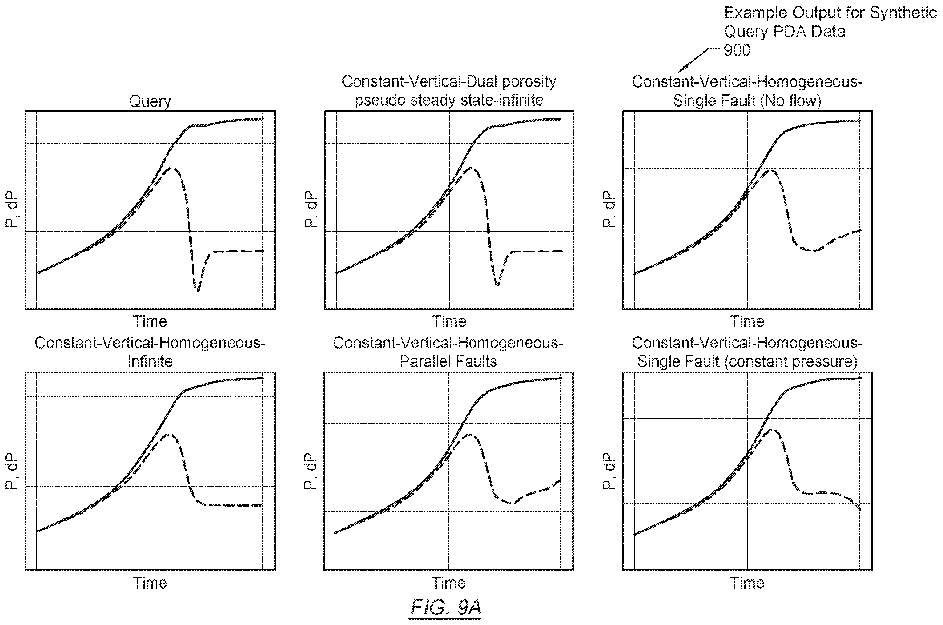

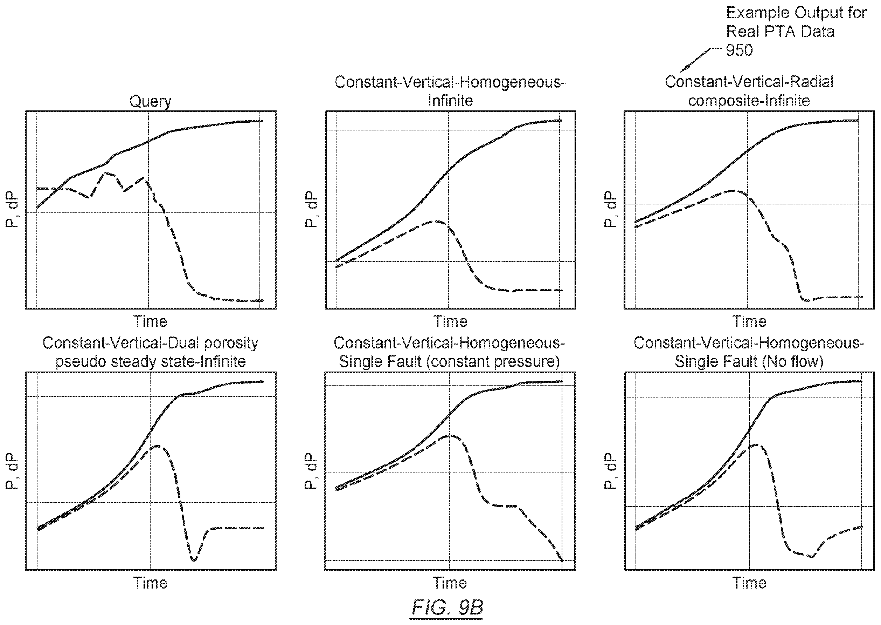

Turning to FIGs. 9A and 9B, examples in accordance with disclosed embodiments are shown. The examples (900, 950) of FIGs. 9A and 9B show PTA curves (pressure, pressure derivative) associated with suggested classes of physics models, in comparison to the query PTA data. Such curves may be provided to the user to enable the user to pick a selected class of models. In the examples of FIGs. 9A and 9B, the left top graph is for the query data. The other graphs show the PTA curves associated with the suggested physics models, ranked from 1 to 5. In FIG. 9A, the query PTA data is synthetic, whereas in FIG. 9B, the query PTA data is the recorded well test response.

For a given well test response (FIG. 9B, left top graph), the examples are based on similarity scores that are computed against the candidates in each class of physics models, resulting in the ranking as shown. Experimental analysis indicates that the true model class frequently appeared in the top ranked classes. Embodiments of the disclosure have been found to achieve an accuracy of 97% for top-3 model recommendations when tested on 70 samples from 14 classes of physics models.

Embodiments of the disclosure provide a methodology to determine a conceptual reservoir model from PTA data in an automated manner. Manually diagnosing the well can be challenging to the interpreter because of the many possible well behaviors during early, middle and late times of the PTA data, and due to the non-uniqueness of the solution, thereby resulting in potential confusion and erroneous choices of models. Accordingly, when manually performed, the quality of the analysis highly depends on the experience of the interpreter.

Embodiments of the disclosure provide a recommendation of well testing model classes, based on query PTA data, in an automated manner. The interpreter (e.g., an engineer or other user) can visually validate the recommendations based on similarity-based rankings. Embodiments of the disclosure, thus, support the interpreter with the challenge to diagnose a well (by determining a physics model and the model parameters) from the observed well behavior. Embodiments of the disclosure therefore accelerate well test analysis and improve reliability.

Embodiments disclosed herein may be implemented on a computing system. Any combination of mobile, desktop, server, router, switch, embedded device, or other types of hardware may be used. For example, as shown in FIG. 10A, the computing system (1000) may include one or more computer processors (1002), non-persistent storage (1004) (e.g., volatile memory, such as random access memory (RAM), cache memory), persistent storage (1006) (e.g., a hard disk, an optical drive such as a compact disk (CD) drive or digital versatile disk (DVD) drive, a flash memory, etc.), a communication interface (1012) (e.g., Bluetooth interface, infrared interface, network interface, optical interface, etc.), and numerous other elements and functionalities.

The computer processor(s) (1002) may be an integrated circuit for processing instructions. For example, the computer processor(s) may be one or more cores or micro-cores of a processor. The computing system (1000) may also include one or more input devices (1010), such as a touchscreen, keyboard, mouse, microphone, touchpad, electronic pen, or any other type of input device.

The communication interface (1012) may include an integrated circuit for connecting the computing system (1000) to a network (not shown) (e.g., a local area network (LAN), a wide area network (WAN) such as the Internet, mobile network, or any other type of network) and/or to another device, such as another computing device.

Further, the computing system (1000) may include one or more output devices (1008), such as a screen (e.g., a liquid crystal display (LCD), a plasma display, touchscreen, cathode ray tube (CRT) monitor, projector, or other display device), a printer, external storage, or any other output device. One or more of the output devices may be the same or different from the input device(s). The input and output device(s) may be locally or remotely connected to the computer processor(s)

(1002), non-persistent storage (1004), and persistent storage (1006). Many different types of computing systems exist, and the aforementioned input and output device(s) may take other forms.

Software instructions in the form of computer readable program code to perform embodiments of the technology may be stored, in whole or in part, temporarily or permanently, on a non-transitory computer readable medium such as a CD, DVD, storage device, a diskette, a tape, flash memory, physical memory, or any other computer readable storage medium. Specifically, the software instructions may correspond to computer readable program code that, when executed by a processor(s), is configured to perform one or more embodiments of the technology.

The computing system (1000) in FIG. 10A may be connected to or be a part of a network. For example, as shown in FIG. 10B, the network (1020) may include multiple nodes (e.g., node X (1022), node Y (1024)). Each node may correspond to a computing system, such as the computing system shown in FIG. 10A, or a group of nodes combined may correspond to the computing system shown in FIG. 10A. By way of an example, embodiments of the technology may be implemented on a node of a distributed system that is connected to other nodes. By way of another example, embodiments of the technology may be implemented on a distributed computing system having multiple nodes, where each portion of the technology may be located on a different node within the distributed computing system. Further, one or more elements of the aforementioned computing system (1000) may be located at a remote location and connected to the other elements over a network.

Although not shown in FIG. 10B, the node may correspond to a blade in a server chassis that is connected to other nodes via a backplane. By way of another example, the node may correspond to a server in a data center. By way of another example, the node may correspond to a computer processor or micro-core of a computer processor with shared memory and/or resources.

The nodes (e.g., node X (1022), node Y (1024)) in the network (1020) may be configured to provide services for a client device (1026). For example, the nodes may be part of a cloud computing system. The nodes may include functionality to receive requests from the client device (1026) and transmit responses to the client device (1026). The client device (1026) may be a computing system, such as the computing system shown in FIG. 10A. Further, the client device (1026) may include and/or perform all or a portion of one or more embodiments of the technology.

The computing system or group of computing systems described in FIG. 10A and 10B may include functionality to perform a variety of operations disclosed herein. For example, the computing system(s) may perform communication between processes on the same or different system. A variety of mechanisms, employing some form of active or passive communication, may facilitate the exchange of data between processes on the same device. Examples representative of these inter-process communications include, but are not limited to, the implementation of a file, a signal, a socket, a message queue, a pipeline, a semaphore, shared memory, message passing, and a memory-mapped file. Further details pertaining to a couple of these non-limiting examples are provided below.

Based on the client-server networking model, sockets may serve as interfaces or communication channel end-points enabling bidirectional data transfer between processes on the same device. Foremost, following the client-server networking model, a server process (*e.g.,* a process that provides data) may create a first socket object. Next, the server process binds the first socket object, thereby associating the first socket object with a unique name and/or address. After creating and binding the first socket object, the server process then waits and listens for incoming connection requests from one or more client processes (*e.g.*, processes that seek data). At this point, when a client process wishes to obtain data from a server process, the client process starts by creating a second socket object. The client process then proceeds to generate a connection request that includes at least the second socket object and the unique name and/or address associated with the first socket object. The client process then transmits the connection request to the server process. Depending on availability, the server process may accept the connection request, establishing a communication channel with the client process, or the server process, busy in handling other operations, may queue the connection request in a buffer until server process is ready. An established connection informs the client process that communications may commence. In response, the client process may generate a data request specifying the data that the client process wishes to obtain. The data request is subsequently transmitted to the server process. Upon receiving the data request, the server process analyzes the request and gathers the requested data. Finally, the server process then generates a reply including at least the requested data and transmits the reply to the client process. The data may be transferred, more commonly, as datagrams or a stream of characters (*e.g.*, bytes).

Shared memory refers to the allocation of virtual memory space in order to substantiate a mechanism for which data may be communicated and/or accessed by multiple processes. In implementing shared memory, an initializing process first creates a shareable segment in persistent or non-persistent storage. Post creation, the initializing process then mounts the shareable segment, subsequently mapping the shareable segment into the address space associated with the initializing process. Following the mounting, the initializing process proceeds to identify and grant access permission to one or more authorized processes that may also write and read data to and from the shareable segment. Changes made to the data in the shareable segment by one process may immediately affect other processes, which are also linked to the shareable segment. Further, when one of the authorized processes accesses the shareable segment, the shareable segment maps to the address space of that authorized process. Often, one authorized process may mount the shareable segment, other than the initializing process, at any given time.

Other techniques may be used to share data, such as the various data described in the present application, between processes without departing from the scope of the technology. The processes may be part of the same or different application and may execute on the same or different computing system.

Rather than or in addition to sharing data between processes, the computing system performing one or more embodiments of the technology may include functionality to receive data from a user. For example, a user may submit data via a graphical user interface (GUI) on the user device. Data may be submitted via the graphical user interface by a user selecting one or more graphical user interface widgets or inserting text and other data into graphical user interface widgets using a touchpad, a keyboard, a mouse, or any other input device. In response to selecting a particular item, information regarding the particular item may be obtained from persistent or non-persistent storage by the computer processor. Upon selection of the item by the user, the contents of the obtained data regarding the particular item may be displayed on the user device in response to the user's selection.

By way of another example, a request to obtain data regarding the particular item may be sent to a server operatively connected to the user device through a network. For example, the user may select a uniform resource locator (URL) link within a web client of the user device, thereby initiating a Hypertext Transfer Protocol (HTTP) or other protocol request being sent to the network host associated with the URL. In response to the request, the server may extract the data regarding the particular selected item and send the data to the device that initiated the request. Once the user device has received the data regarding the particular item, the contents of the received data regarding the particular item may be displayed on the user device in response to the user's selection. Further to the above example, the data received from the server after selecting the URL link may provide a web page in Hyper Text Markup Language (HTML) that may be rendered by the web client and displayed on the user device.

Once data is obtained, such as by using techniques described above or from storage, the computing system, in performing one or more embodiments of the technology, may extract one or more data items from the obtained data. For example, the extraction may be performed as follows by the computing system in FIG. 10A. First, the organizing pattern (*e. g.*, grammar, schema, layout) of the data is determined, which may be based on one or more of the following: position (*e.g.*, bit or column position, Nth token in a data stream, *etc.*), attribute (where the attribute is associated with one or more values), or a hierarchical/tree structure (consisting of layers of nodes at different levels of detail-such as in nested packet headers or nested document sections). Then, the raw, unprocessed stream of data symbols is parsed, in the context of the organizing pattern, into a stream (or layered structure) of tokens (where each token may have an associated token "type").

Next, extraction criteria are used to extract one or more data items from the token stream or structure, where the extraction criteria are processed according to the organizing pattern to extract one or more tokens (or nodes from a layered structure). For position-based data, the token(s) at the position(s) identified by the extraction criteria are extracted. For attribute/value-based data, the token(s) and/or node(s) associated with the attribute(s) satisfying the extraction criteria are extracted. For hierarchical/layered data, the token(s) associated with the node(s) matching the extraction criteria are extracted. The extraction criteria may be as simple as an identifier string or may be a query presented to a structured data repository (where the data repository may be organized according to a database schema or data format, such as XML).

The extracted data may be used for further processing by the computing system. For example, the computing system of FIG. 10A, while performing one or more embodiments of the technology, may perform data comparison. Data comparison may be used to compare two or more data values (*e.g.*, A, B). For example, one or more embodiments may determine whether A > B, A = B, A != B, A < B, *etc.* The comparison may be performed by submitting A, B, and an opcode specifying an operation related to the comparison into an arithmetic logic unit (ALU) (*i.e.*, circuitry that performs arithmetic and/or bitwise logical operations on the two data values). The ALU outputs the numerical result of the operation and/or one or more status flags related to the numerical result. For example, the status flags may indicate whether the numerical result is a positive number, a negative number, zero, *etc.* By selecting the proper opcode and then reading the numerical results and/or status flags, the comparison may be executed. For example, in order to determine if A > B, B may be subtracted from A (*i.e.*, A - B), and the status flags may be read to determine if the result is positive (*i.e.*, if A > B, then A - B > 0). In one or more embodiments, B may be considered a threshold, and A is deemed to satisfy the threshold if A = B or if A > B, as determined using the ALU. In one or more embodiments of the technology, A and B may be vectors, and comparing A with B includes comparing the first element of vector A with the first element of vector B, the second element of vector A with the second element of vector B, *etc.* In one or more embodiments, if A and B are strings, the binary values of the strings may be compared.

The computing system in FIG. 10A may implement and/or be connected to a data repository. For example, one type of data repository is a database. A database is a collection of information configured for ease of data retrieval, modification, reorganization, and deletion. Database Management System (DBMS) is a software application that provides an interface for users to define, create, query, update, or administer databases.

The user, or software application, may submit a statement or query into the DBMS. Then the DBMS interprets the statement. The statement may be a select statement to request information, update statement, create statement, delete statement, *etc.* Moreover, the statement may include parameters that specify data, or data container (database, table, record, column, view, *etc.*), identifier(s), conditions (comparison operators), functions (*e.g.* join, full join, count, average, *etc.*), sort (*e.g.* ascending, descending), or others. The DBMS may execute the statement. For example, the DBMS may access a memory buffer, a reference or index a file for read, write, deletion, or any combination thereof, for responding to the statement. The DBMS may load the data from persistent or non-persistent storage and perform computations to respond to the query. The DBMS may return the result(s) to the user or software application.

The computing system of FIG. 10A may include functionality to present raw and/or processed data, such as results of comparisons and other processing. For example, presenting data may be accomplished through various presenting methods. Specifically, data may be presented through a user interface provided by a computing device. The user interface may include a GUI that displays information on a display device, such as a computer monitor or a touchscreen on a handheld computer device. The GUI may include various GUI widgets that organize what data is shown as well as how data is presented to a user. Furthermore, the GUI may present data directly to the user, *e.g.*, data presented as actual data values through text, or rendered by the computing device into a visual representation of the data, such as through visualizing a data model.

For example, a GUI may first obtain a notification from a software application requesting that a particular data object be presented within the GUI. Next, the GUI may determine a data object type associated with the particular data object, *e.g.*, by obtaining data from a data attribute within the data object that identifies the data object type. Then, the GUI may determine any rules designated for displaying that data object type, *e.g.*, rules specified by a software framework for a data object class or according to any local parameters defined by the GUI for presenting that data object type. Finally, the GUI may obtain data values from the particular data object and render a visual representation of the data values within a display device according to the designated rules for that data object type.

Data may also be presented through various audio methods. In particular, data may be rendered into an audio format and presented as sound through one or more speakers operably connected to a computing device.

Data may also be presented to a user through haptic methods. For example, haptic methods may include vibrations or other physical signals generated by the computing system. For example, data may be presented to a user using a vibration generated by a handheld computer device with a predefined duration and intensity of the vibration to communicate the data.

The above description of functions presents a few examples of functions performed by the computing system of FIG. 10A and the nodes and/ or client device in FIG. 10B. Other functions may be performed using one or more embodiments of the technology.

While the technology has been described with respect to a limited number of embodiments, those skilled in the art, having benefit of this disclosure, will appreciate that other embodiments can be devised which do not depart from the scope as disclosed herein. Accordingly, the scope of the technology should be limited only by the attached claims.

**Claims**

1. A computer-implemented method comprising:

   obtaining (702) query pressure transient analysis (PTA) data (304) from a well associated with a reservoir, the query pressure transient analysis (PTA) data (304) being based on measurements obtained by a data acquisition tool in the well including measurements of pressure over time and derivatives of the pressure over time;
   obtaining (706) a selected class of physics models (324) from a plurality of classes of physics models (312) using a first machine learning model (322) operating on the query PTA data (304), wherein a physics model (324) in at least one of the plurality of classes of physics models (312) comprises a well model (224) and a reservoir model (226), and wherein the well model (224) and the reservoir model (226) are parameterized with model parameters (316) having model parameter values, wherein the first machine learning model (322) is a Siamese neural network that is trained based on training data (522) obtained by sampling historical data based on well model (224), reservoir model (226) and a boundary model (228) across a plurality of classes of physics models (512);
   obtaining (712) a plurality of model parameter value estimates (334) to form a parameterized query physics model (342) of the selected class of physics models (326), using a second machine learning model (332) operating on the query PTA data (304), wherein the second machine learning model (332) is a Siamese neural network that is trained based on training data obtained by performing sampling of historical data based on the model parameters (516) within classes of physics models (512); and
   providing (714) the parameterized query physics model (342) to a user.

2. The method of claim 1,
   wherein obtaining the selected class of physics models (326) from the plurality of classes of physics models (312) comprises selecting (706) a set of suggested classes of physics models (324) from the plurality of classes of physics models (312) using the first machine learning model (322), and receiving (710) from the user a selection of the selected class of physics models (326) from the suggested classes of physics models (324).

3. The method of claim 1,
   wherein the physics model (324) further comprises a boundary model (228).

4. The method of claim 1, further comprising training (806, 808) the first machine learning model (322) and the second machine learning model (332), wherein the training comprises:

   obtaining (802) the historical data comprising:
   a plurality of physics models (514) and model parameters (516) in the plurality of classes,
   sampling (804) the historical data to obtain training data (604); and
   training (806, 808) the first machine learning model (322) and the second machine learning model (332) using the training data (604).

5. The method of claim 1, wherein the sampling relies on a design of experiments (DOE)-based approach.

6. The method of claim 1, further comprising:
   updating the model parameter value estimates (334) based on an input by the user.

7. The method of claim 6, further comprising, after updating the model parameter value estimates (334), and before obtaining the historical data:
   adding the parameterized query physics model (342) with the model parameter value estimates to the historical data.

8. A system (1000) comprising:

   a computer processor (1002); and
   instructions executing on the computer processor (10002) causing the system to perform the steps of the method of any preceding claim.

9. A computer program product configured to perform a method according to any one of claims 1 to 7.


**Patentansprüche**

1. Computerimplementiertes Verfahren, umfassend:

   Erhalten (702) von Abfragedaten (304) mit Drucktransientenanalyse (PTA) aus einer Bohrung, die mit einer Lagerstätte verbunden ist, wobei die Abfragedaten (304) mit Drucktransientenanalyse (PTA) auf Messungen, die durch ein Datenerfassungswerkzeug in der Bohrung erhalten wurden, basieren, einschließlich Messungen von Druck im Laufe der Zeit und Ableitungen des Drucks im Laufe der Zeit;
   Erhalten (706) einer ausgewählten Klasse von Physikmodellen (324) aus einer Vielzahl von Klassen von Physikmodellen (312) unter Verwendung eines ersten Maschinenlernenmodells (322), das mit den Abfrage-PTA-Daten (304) betrieben wird, wobei ein Physikmodell (324) in mindestens einer der Vielzahl von Klassen von Physikmodellen (312) ein Bohrungsmodell (224) und ein Lagerstättenmodell (226) umfasst, und wobei das Bohrungsmodell (224) und das Lagerstättenmodell (226) mit Modellparametern (316) parametrisiert sind, die Modellparameterwerte aufweisen, wobei das erste Maschinenlernenmodell (322) ein siamesisches neuronales Netz ist, das basierend auf Trainingsdaten (522) trainiert wird, die durch Stichprobenentnahme historischer Daten basierend auf Bohrungsmodell (224), Lagerstättenmodell (226) und einem Grenzmodell (228) über eine Vielzahl von Klassen von Physikmodellen (512) erhalten werden;
   Erhalten (712) einer Vielzahl von Modellparameterwertschätzungen (334), um ein parametrisiertes Abfragephysikmodell (342) der ausgewählten Klasse von Physikmodellen (326) unter Verwendung eines zweiten Maschinenlernenmodells (332), das auf den Abfrage-PTA-Daten (304) betrieben wird, auszubilden, wobei das zweite Maschinenlernenmodell (332) ein siamesisches neuronales Netz ist, das basierend auf Trainingsdaten trainiert wird, die durch Durchführen einer Stichprobenentnahme historischer Daten basierend auf den Modellparametern (516) innerhalb von Klassen von Physikmodellen (512) erhalten werden; und
   Bereitstellen (714) des parametrisierten Abfragephysikmodells (342) an einen Benutzer.

2. Verfahren nach Anspruch 1,
   wobei das Erhalten der ausgewählten Klasse von Physikmodellen (326) aus der Vielzahl von Klassen von Physikmodellen (312) das Auswählen (706) eines Satzes vorgeschlagener Klassen von Physikmodellen (324) aus der Vielzahl von Klassen von Physikmodellen (312) unter Verwendung des ersten Maschinenlernenmodells (322) und ein Empfangen (710) einer Auswahl der ausgewählten Klasse von Physikmodellen (326) aus den vorgeschlagenen Klassen von Physikmodellen (324) von dem Benutzer umfasst.

3. Verfahren nach Anspruch 1,
   wobei das Physikmodell (324) ferner ein Grenzmodell (228) umfasst.

4. Verfahren nach Anspruch 1, ferner umfassend das Trainieren (806, 808) des ersten Maschinenlernmodells (322) und des zweiten Maschinenlernmodells (332), wobei das Training umfasst:
   Erhalten (802) der historischen Daten, umfassend:

   eine Vielzahl von Physikmodellen (514) und Modellparametern (516) in der Vielzahl von Klassen;
   Stichprobenentnahme (804) der historischen Daten, um Trainingsdaten (604) zu erhalten; und
   Trainieren (806, 808) des ersten Maschinenlernmodells (322) und des zweiten Maschinenlernmodells (332) unter Verwendung der Trainingsdaten (604).

5. Verfahren nach Anspruch 1, wobei die Stichprobenentnahme auf einem Ansatz basierend auf statistischer Versuchsplanung (DOE) beruht.

6. Verfahren nach Anspruch 1, ferner umfassend:
   Aktualisieren der Modellparameterwertschätzungen (334) basierend auf einer Eingabe durch den Benutzer.

7. Verfahren nach Anspruch 6, ferner umfassend, nach dem Aktualisieren der Modellparameterwertschätzungen (334) und vor dem Erhalten der historischen Daten:
   Hinzufügen des parametrisierten Abfragephysikmodells (342) mit den Modellparameterwertschätzungen zu den historischen Daten.

**8.** System (1000), umfassend:

einen Computerprozessor (1002); und

Anweisungen, die auf dem Computerprozessor (10002) ausgeführt werden, wobei sie das System veranlassen, die Schritte des Verfahrens nach einem der vorstehenden Ansprüche durchzuführen.

**9.** Computerprogrammprodukt, das konfiguriert ist, um ein Verfahren nach einem der Ansprüche 1 bis 7 durchzuführen.

**Revendications**

**1.** Procédé mis en œuvre par ordinateur comprenant :

l'obtention (702) de données d'analyse transitoire de pression (PTA) de requête (304) provenant d'un puits associé à un réservoir, les données d'analyse transitoire de pression (PTA) de requête (304) étant basées sur des mesures obtenues par un outil d'acquisition de données situé dans le puits, comportant des mesures de pression au fil du temps et des dérivés de la pression au fil du temps ;

l'obtention (706) d'une classe sélectionnée de modèles physiques (324) parmi une pluralité de classes de modèles physiques (312) à l'aide d'un premier modèle d'apprentissage automatique (322) fonctionnant sur les données PTA de requête (304), dans lequel un modèle physique (324) dans au moins l'une de la pluralité de classes de modèles physiques (312) comprend un modèle de puits (224) et un modèle de réservoir (226), et dans lequel le modèle de puits (224) et le modèle de réservoir (226) sont paramétrés avec des paramètres de modèle (316) ayant des valeurs de paramètres de modèle, dans lequel le premier modèle d'apprentissage automatique (322) est un réseau neuronal siamois qui est entraîné sur la base de données d'entraînement (522) obtenues par échantillonnage de données historiques basées sur le modèle de puits (224), le modèle de réservoir (226) et un modèle de limites (228) à travers une pluralité de classes de modèles physiques (512) ;

l'obtention (712) d'une pluralité d'estimations de valeurs de paramètres de modèle (334) pour former un modèle physique de requête paramétré (342) de la classe sélectionnée de modèles physiques (326), à l'aide d'un second modèle d'apprentissage automatique (332) fonctionnant sur les données PTA de requête (304), dans lequel le second modèle d'apprentissage automatique (332) est un réseau neuronal siamois qui est entraîné sur la base de données d'entraînement obtenues en effectuant un échantillonnage de données historiques sur la base des paramètres de modèle (516) au sein de classes de des modèles physiques (512) ; et

la fourniture (714) du modèle physique de requête paramétré (342) à un utilisateur.

**2.** Procédé selon la revendication 1,
dans lequel l'obtention de la classe sélectionnée de modèles physiques (326) parmi la pluralité de classes de modèles physiques (312) comprend la sélection (706) d'un ensemble de classes suggérées de modèles physiques (324) parmi la pluralité de classes de modèles physiques (312) à l'aide du premier modèle d'apprentissage automatique (322), et la réception (710), en provenance de l'utilisateur, d'une sélection de la classe sélectionnée de modèles physiques (326) parmi les classes suggérées de modèles physiques (324).

**3.** Procédé selon la revendication 1,
dans lequel le modèle physique (324) comprend en outre un modèle de limites (228).

**4.** Procédé selon la revendication 1, comprenant en outre l'entraînement (806, 808) du premier modèle d'apprentissage automatique (322) et du second modèle d'apprentissage automatique (332), dans lequel l'entraînement comprend :
l'obtention (802) des données historiques comprenant :

une pluralité de modèles physiques (514) et de paramètres de modèle (516) dans la pluralité de classes ;
l'échantillonnage (804) des données historiques pour obtenir des données d'entraînement (604) ; et
l'entraînement (806, 808) du premier modèle d'apprentissage automatique (322) et du second modèle d'apprentissage automatique (332) à l'aide des données d'entraînement (604).

**5.** Procédé selon la revendication 1, dans lequel l'échantillonnage repose sur une approche basée sur des plans d'expériences (DOE).

**6.** Procédé selon la revendication 1, comprenant en outre :
la mise à jour des estimations de valeur de paramètre de modèle (334) sur la base d'une entrée de l'utilisateur.

7. Procédé selon la revendication 6, comprenant en outre, après la mise à jour des estimations de valeur de paramètre de modèle (334), et avant l'obtention des données historiques :
l'ajout du modèle physique de requête paramétré (342) avec les estimations de valeur de paramètre de modèle aux données historiques.

8. Système (1000) comprenant :

   un processeur informatique (1002) ; et
   des instructions s'exécutant sur le processeur informatique (10002), amenant le système à mettre en œuvre les étapes du procédé selon l'une quelconque des revendications précédentes.

9. Produit-programme informatique configuré pour réaliser un procédé selon l'une quelconque des revendications 1 à 7.

FIG. 1

*FIG. 2*

System for Well Test Analysis (Inference) 300

Query Data 302

Query PTA Data 304

Known Model Parameters 306

Repository 310

Classes of Physics Models 312

Physics Models 314

Model Parameters 316

Physics Model Identification Module 320

Machine Learning Model 1 322

Suggested Classes of Physics Models 324

Selected Class of Physics Models 326

Parameter Estimation Module 330

Machine Learning Model 2 332

Model Parameter Value Estimates 334

User Interface 340

Parameterized Query Physics Model 342

Simulated Query PTA Data 344

*FIG. 3*

Siamese Neural Network 400

Input Layer 452

Input 1 454

Input 2 456

Convolutional Neural Network (CNN) 462

Duplicate Convolutional Neural Network (CNN) 472

Long Short-Term Memory (LSTM) 464

Duplicate Long Short-Term Memory (LSTM) 474

Distance Layer 482

Output Layer 484

FIG. 4

*FIG. 5*

**Training Configuration 602**

Training Data 604 → PTA Data 606

PTA Data 606 → Transform 608 → Positive PTA Data 612

Training Data 604 → Transform 610 → Negative PTA data 614

PTA Data 606 → Siamese Neural Network 616

Positive PTA Data 612 / Negative PTA data 614 → Siamese Neural Network 616 → Loss Function 618

Loss Function 618 → Siamese Neural Network 616

*FIG. 6*

700
Inference
Process

START

Obtain query pressure transient analysis (PTA) data
Block 702

Obtain known model parameters
Block 704

Select a set of suggested classes of physics models
from a set of physics models using a first machine learning model
Block 706

Provide selection of suggested classes of physics models to user
Block 708

Obtain, from user, one of the suggested classes of physics
models as a selected class of physics models
Block 710

Obtain model parameter value estimates for the selected physical
model using a second machine learning model
Block 712

Provide model parameter value estimates to user
Block 714

END

*FIG. 7*

800
Training
Process

( START )

Obtain historical data including pressure transient analysis (PTA)
data and model parameters for a set of physics models
Block 802

Sample historical data to obtain training data
Block 804

Train first machine learning model to predict suggested classes of
physics models, using the training data
Block 806

Train second machine learning model to predict parameter
estimates for a selected physics model, using the training data
Block 808

( END )

FIG. 8

Example Output for Synthetic
Query PDA Data
900

Query

Constant-Vertical-Dual porosity
pseudo steady state-infinite

Constant-Vertical-Homogeneous-
Single Fault (No flow)

Constant-Vertical-Homogeneous-
Infinite

Constant-Vertical-Homogeneous-
Parallel Faults

Constant-Vertical-Homogeneous-
Single Fault (constant pressure)

*FIG. 9A*

*FIG. 9B*

1000
Computing
System

1008
Output Device(s)

1004
Non-Persistent
Storage

1002
Computer
Processor(s)

1006
Persistent
Storage

1012
Communication
Interface

1010
Input Device(s)

*FIG. 10A*

1020
Network

1022
Node X

1024
Node Y

1026
Client Device

*FIG. 10B*

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **ZHOU QUIMEI**. *Development and application of an artificial expert system for the pressure transient analysis of a dual-lateral well configuration*, 01 August 2013
- **FENG XIN et al.** A deep-learning-based oil-well-testing stage interpretation model integrating multi-feature extraction methods. *Energies*, 20 April 2020, vol. 13 (8), 2042
- **KOCH GREGORY et al.** Siamese Neural Networks for one-shot image recognition. *2nd International Conference on Machine Learning*, 01 January 2015, vol. 37
- Hydrocarbon reservoir model detection from pressure transient data using coupled artificial neural network-Wavelet transform approach. **VAFERI BEHZAD et al.** Applied Soft Computing. Elsevier, 04 June 2016, vol. 47, 63-75
- **NAGARAJ GURU et al.** *Deep Similarity learning for Well test model identification*, 29 November 2021